# EUROPEAN PATENT APPLICATION

(11) **EP 4 545 595 A1**
(43) Date of publication of application: **30.04.2025**
(21) Application number: 23827226.4
(22) Date of filing: 21.06.2023
(51) Int. Cl.: C08L 23/10, B32B 27/32, C08L 23/08, C08L 23/20, C08L 23/26

(54) **RESIN COMPOSITION, AND MONOLAYER AND MULTILAYER FILMS**

(30) Priority: 22.06.2022 JP 2022100389
(71) Applicant: Mitsui Chemicals, Inc., Tokyo 104-0028 (JP)
(72) Inventor: KIYOSAWA, Mayumi, Ichihara-shi, Chiba 299-0108 (JP); IZAIKE, Yuhei, Ichihara-shi, Chiba 299-0108 (JP); SASAKI, Takanori, Ichihara-shi, Chiba 299-0108 (JP)
(74) Representative: Hoffmann Eitle
(86) International application number: PCT/JP2023/022887
(87) International publication number: WO 2023/249043

(57) **Abstract**

The purpose of the present invention is to provide a resin composition which is excellent in whitening resistance during deformation processing, and can be used for, for example, packaging materials for food products, construction materials, and packages for lithium ion batteries, and a monolayer film or a multilayer film including a layer containing the resin composition.

The resin composition of the present invention includes a propylene-based polymer (A) having a melting point of 100°C or more,
a 1-butene/ethylene copolymer (B) in which the content of a constituent unit (i) derived from 1-butene is 70 to 97 mol%, a polyolefin (C) containing a structural unit derived from an unsaturated carboxylic acid and/or a derivative thereof, and an ethylene-based polymer (D) containing a constituent unit derived from ethylene at 60 to 100 mol%. The content of the 1-butene/ethylene copolymer (B) in the composition is 7 to 38 mass%.

## Description

### Technical Field

The present invention relates to resin compositions, and monolayer films and multilayer films, and more specifically relates to monolayer films and multilayer films suitably used for, for example, packaging materials for food products, construction materials, and packaging materials for lithium ion batteries, and a resin composition contained in these films.

### Background Art

Conventionally, polypropylene has been widely used as a thermoplastic molding material that is excellent in, for example, rigidity, heat resistance and transparency. Such polypropylene is a nonpolar material, which has poor adhesiveness to a polar material such as an ethylene/vinyl alcohol copolymer. Techniques are widely known in which polypropylene is modified with an unsaturated carboxylic acid or a derivative thereof for improving the adhesiveness. Because polypropylene is poor in flexibility, a soft rubber component is usually compounded into polypropylene when the polypropylene is used as an adhesive.

Such compounding of a soft rubber component with polypropylene yields a polypropylene-based adhesive having improved adhesiveness (for example, Patent Literature 1 and Patent Literature 2). On the other hand, the soft rubber component causes whitening during secondary processings such as deep drawing and bending, and therefore an improvement in whitening resistance has been required. In particular, examples of specific applications requiring deep drawing and bending include those of packaging materials for food products, construction materials, and packaging materials for lithium ion batteries.

Among them, lithium ion batteries have been increasingly used for, for example, portable electronic devices, and automobiles. Further, for lithium ion batteries, pouch-type and emboss-type packages with a multilayer film as a packaging film, which are superior in lightweight properties, heat dissipation property and shape-forming property to cylindrical and rectangular packaging materials, thus have been increasingly used from the viewpoint of meeting the freedom in shape and the size reduction. Such a packaging material comprising a multilayer film comprises at least a substrate layer, a metal foil layer, a thermally sealable resin layer, and an adhesive layer which bonds two adjacent layers among these three layers. Although the multilayer film has high freedom in shape, and therefore is easy to process during production of packages of a pouch-type or emboss-type, the deformed portions of the multilayer film may be whitened during deformation. Because whitened portions of the package cause short circuit, a material having high whitening resistance has been demanded.

Patent Literature 3 describes a packaging material for a battery comprising a laminate of a substrate layer, a metal foil layer including a chemically treated layer on at least one surface thereof, an acid-modified polyolefin layer, and a sealant layer composed of a high melting point polypropylene layer and an ethylene/propylene random copolymer layer, these layers being at least sequentially disposed, wherein the high melting point polypropylene layer is disposed closer to the metal foil layer than the ethylene/propylene random copolymer layer is, and the melting point is 150°C or more. In the packaging material for a battery, the high melting point polypropylene layer having a melting point of 150°C or more is disposed closer to the metal foil layer than the ethylene/propylene random copolymer layer is. For this reason, even if the temperature of the inside of a package is increased by, for example, overcharge, the high melting point polypropylene layer does not melt, and the contact between the metal terminal and the metal foil layer is thus prevented, so that occurrence of internal short circuit can be suppressed.

Patent Literature 4 describes a polypropylene resin composition for a battery packaging film comprising a propylene-ethylene block copolymer (A) comprising a propylene-based polymer component (A1) and a propylene-ethylene random copolymer component (A2), the propylene-ethylene block copolymer (A) being prepared through multistage polymerization, the propylene polymer component (A1) and the propylene-ethylene random copolymer component (A2) satisfying specific conditions such as the content of ethylene. According to the description of this patent literature, the film formed of this composition has high heat resistance, sealing performance, and moldabilities, has high sealing strength and impact resistance, and has an effect of improving whitening resistance and crack resistance during deformation processing in a good balance.

### Citation List

### Patent Literature

Patent Literature 1: JPH9(1997)-111069A
Patent Literature 2: JPH4(1992)-300933A
Patent Literature 3: JP2007-273398A
Patent Literature 4: JP2015-230777A

### Summary of Invention

### Technical Problem

Unfortunately, the packaging material described in Patent Literature 3 cannot be expected to exhibit sufficient whitening resistance in battery applications. Actually, the composition described in Patent Literature 4 does not reach a required level concerning whitening resistance.

In view of the problems described above, an object of the present invention is to provide a resin composition which is excellent in whitening resistance during deformation processing, and can be used for, for example, packaging materials for food products, construction materials, and packages for lithium ion batteries, and a monolayer film or a multilayer film including a layer containing the resin composition.

### Solution to Problem

The present invention relates to the following [1] to [14] for example.
[1] A resin composition comprising:
   a propylene-based polymer (A) satisfying the following requirement (a);
   a 1-butene/ethylene copolymer (B) satisfying the following requirement (b-1);
   a polyolefin (C) containing a structural unit derived from an unsaturated carboxylic acid and/or a derivative thereof; and
   an ethylene-based polymer (D) containing a constituent unit derived from ethylene at 60 to 100 mol%,
   wherein a content of the 1-butene/ethylene copolymer (B) in the composition is 7 to 38 mass%:
      (a) a melting point as measured by differential scanning calorimetry is 100°C or more; and
      (b-1) a content of a constituent unit (i) derived from 1-butene is in a range of 70 to 97 mol%, and a content of a constituent unit (ii) derived from ethylene is in a range of 3 to 30 mol% when a total of the constituent unit (i) and the constituent unit (ii) is 100 mol%.
[2] The resin composition according to [1], comprising: 45 to 87.9 parts by mass of the propylene-based polymer (A);
   7 to 38 parts by mass of the 1-butene/ethylene copolymer (B);
   0.1 to 10 parts by mass of the polyolefin (C); and
   5 to 30 parts by mass of the ethylene-based polymer (D) (provided that a total of (A), (B), (C) and (D) is 100 parts by mass).
[3] The resin composition according to [1] or [2], wherein the polyolefin (C) contains 0.01 to 5 mass% of the structural unit derived from an unsaturated carboxylic acid and/or a derivative thereof in terms of a structural unit derived from maleic anhydride, and
   further, in the polyolefin (C), a content proportion of the structural unit derived from propylene in the structural units excluding the structural unit derived from an unsaturated carboxylic acid and/or a derivative thereof is 90 to 100 mol %.
[4] The resin composition according to any one of [1] to [3], wherein an isotactic pentad fraction (mmmm) of the 1-butene/ethylene copolymer (B) calculated by ¹³C-NMR is in a range of 80 to 99.9% .
[5] The resin composition according to any one of [1] to [4], wherein a weight average molecular weight (Mw) of the 1-butene/ethylene copolymer (B) is 100,000 to 600,000.
[6] The resin composition according to any one of [1] to [5], wherein a Shore D hardness as measured according to ASTM D2240 is in a range of 20 to 70.
[7] A monolayer film or a multilayer film comprising at least one layer comprising the resin composition according to any one of [1] to [6].
[8] A multilayer film comprising at least one layer containing the resin composition according to any one of [1] to [6], wherein both surfaces of the layer containing the resin composition are in contact with another layer.
[9] A multilayer film comprising at least one layer containing the resin composition according to any one of [1] to [6], wherein one or both surfaces of the layer containing the resin composition are in contact with at least one of a metal-containing layer, a polyolefin layer and a polar resin layer.
[10] The monolayer film or the multilayer film according to [7] or the multilayer film according to [8] or [9], wherein the film is a film for food packaging.
[11] The monolayer film or the multilayer film according to [7] or the multilayer film according to [8] or [9], wherein the film is a film for a construction material.
[12] The monolayer film or the multilayer film according to [7] or the multilayer film according to [8] or [9], wherein the film is a film for battery packaging.
[13] The monolayer film or the multilayer film according to [7] or the multilayer film according to [8] or [9], wherein the film is a pouch-type film for battery packaging.
[14] A method of producing a monolayer film or a multilayer film, comprising the step of performing melt extrusion molding of the resin composition according to any one of [1] to [6].

### Advantageous Effect of Invention

A monolayer film or a multilayer film comprising a layer formed of the resin composition according to the present invention is excellent in whitening resistance during deformation processing, and can be suitably used as a packaging material for forming packaging materials for food products, construction materials, and packages for batteries such as lithium ion batteries.

### Description of Embodiments

The present invention will be described in detail below.

In the present invention, the description of "X to Y" that expresses a numerical range means a numerical range including the lower limit and the upper limit that are end points unless otherwise specified. When numerical ranges are described in a gradual manner, the upper limit and the lower limit of each numerical range may be arbitrarily combined.

### <Resin composition>

The resin composition according to the present invention comprises a propylene-based polymer (A), a 1-butene/ethylene copolymer (B), a polyolefin (C) containing a structural unit derived from an unsaturated carboxylic acid and/or a derivative thereof, and an ethylene-based polymer (D).

### Propylene-based polymer (A)

Examples of the propylene-based polymer (A) can include propylene homopolymers, or copolymers of propylene and at least one α-olefin having 2 to 20 carbon atoms excluding propylene. Here, examples of the α-olefin having 2 to 20 carbon atoms other than propylene include, ethylene, 1-butene, 1-pentene, 1-hexene, 4-methyl-1-pentene, 1-octene, 1-decene, 1-dodecene, 1-tetradecene, 1-hexadecene, 1-octadecene and 1-eicosene, and ethylene or an α-olefin having 4 to 10 carbon atoms is preferable.

The copolymer of propylene and any of these α-olefins may be a random copolymer or a block copolymer. The structural unit derived from any of the α-olefins can be contained in a proportion of 35 mol % or less, preferably 30 mol % or less, more preferably 20 mol% or less, further preferably 10 mol% or less, particularly preferably 5 mol% or less in the copolymer of the α-olefins and propylene.

The propylene-based polymer (A) according to the present invention satisfies the following requirement (a).
(a) A melting point as measured by differential scanning calorimetry is 100°C or more.

The melting point is preferably 100 to 170°C, more preferably 120 to 165°C.

The propylene-based polymer (A) desirably has a melt flow rate (MFR) in the range of 0.01 to 1000 g/10 min, preferably 0.05 to 100 g/10 min observed at 230°C and a load of 2.16 kg according to ASTM D 1238.

The propylene-based polymer (A) may have any of an isotactic structure and a syndiotactic structure. As described later, one of these structures can be selected in consideration of the compatibility with the 1-butene/ethylene copolymer (B).

In other words, examples of the form of the propylene-based polymer (A) include an isotactic propylene-based polymer (A1) and a syndiotactic propylene-based polymer (A2).

Examples of the isotactic propylene-based polymer (A1) include homopolypropylenes having high heat resistance, such as homopolypropylenes usually known to contain 3 mol% or less of a copolymerization component other than propylene; polypropylene impact copolymers having a good balance between the heat resistance and the flexibility, such as polypropylene impact copolymers usually known to contain 3 to 30 mass% of a normal decane-elutable rubber component; and random polypropylenes having a good balance between the flexibility and the transparency, such as random polypropylenes usually known to have a melt peak in the range of 100°C or more, preferably 110°C to 150°C as measured with a differential scanning calorimeter DSC. The isotactic propylene-based polymer (A1) can be appropriately selected from these polypropylene components to attain the target physical properties, or two or more of the polypropylene components having different melting points and different rigidities can be used in combination.

Such an isotactic propylene-based polymer (A1) can be produced, for example, through polymerization of propylene or copolymerization of propylene and other α-olefin in the presence of a Ziegler catalyst system containing a solid catalyst component containing magnesium, titanium, halogen, and an electron donor as essential components, an organic aluminum compound, and an electron donor or a metallocene catalyst system using a metallocene compound as one component of the catalyst.

The syndiotactic propylene-based polymer (A2) contains 90 mol% or more of a structural unit derived from propylene, and 10 mol% or less of a structural unit derived from at least one member selected from ethylene and α-olefins having 4 to 20 carbon atoms. The syndiotactic propylene-based polymer (A2) preferably contains 91 mol% or more of the structural unit derived from propylene, and 9 mol% or less of the structural unit derived from at least one member selected from ethylene and α-olefins having 4 to 20 carbon atoms (provided that a total of these structural units is 100 mol%).

Examples of ethylene and the α-olefin having 4 to 20 carbon atoms include ethylene, 1-butene, 3-methyl-1-butene, 1-pentene, 1-hexene, 4-methyl-1-pentene, 1-octene, 1-decene, 1-dodecene, 1-tetradecene, 1-hexadecene, 1-octadecene, and 1-eicosene.

The syndiotactic propylene-based polymer (A2) can be produced by a method described in WO2011/078054, for example.

The propylene polymers (A) may be used alone or in combination of two or more thereof in the resin composition of the present invention.

### 1-Butene/ethylene copolymer (B)

The 1-butene/ethylene copolymer (B) satisfies the following requirement (b-1).
(b-1) A content of a constituent unit (i) derived from 1-butene is in a range of 70 to 97 mol%, and a content of a constituent unit (ii) derived from ethylene is in a range of 3 to 30 mol% when a total of the constituent unit (i) and the constituent unit (ii) is 100 mol%.
   The 1-butene/ethylene copolymer (B) preferably satisfies at least one of the following requirements (b-2) to (b-5).
(b-2) An isotactic pentad fraction (mmmm) calculated by ¹³C-NMR is in a range of 80 to 99.9%.
(b-3) An intrinsic viscosity [η] as measured in decalin at 135°C is in a range of 0.7 to 2.5 dl/g.
(b-4) A melt flow rate (MFR) as measured at 190°C and a load of 2.16 kg in accordance with ASTM D1238 is 1 to 100 g/10 min.
(b-5) A weight average molecular weight (Mw) is 100,000 to 600,000.

Hereinafter, these requirements related to the 1-butene/ethylene copolymer (B), among others, will be described in detail.

### (Requirement (b-1))

(b-1): A content of a constituent unit (i) derived from 1-butene is in a range of 70 to 97 mol%, and a content of a constituent unit (ii) derived from ethylene is in a range of 3 to 30 mol% when a total of the constituent unit (i) and the constituent unit (ii) is 100 mol%.

In the 1-butene/ethylene copolymer (B) according to the present invention, the lower limit value of the amount of the constituent unit derived from 1-butene is 70 mol%. The lower limit value of the amount of the constituent unit is preferably 75 mol%, more preferably 80 mol%, further preferably 83 mol%, particularly preferably 85 mol%.

The upper limit value of the amount of the constituent unit derived from 1-butene is 97 mol%, preferably 96 mol%, more preferably 95 mol%, further preferably 94 mol%, particularly preferably 90.5 mol%.

In the 1-butene/ethylene copolymer (B) according to the present invention, the upper limit value of the amount of the constituent unit (ii) derived from ethylene is 30 mol%. The upper limit value of the amount of the constituent unit is preferably 25 mol%, more preferably 20 mol%, further preferably 17 mol%, particularly preferably 15 mol%.

On the other hand, the lower limit value of the amount of the constituent unit (ii) derived from ethylene is 3 mol%, preferably 4 mol%, more preferably 5 mol%, further more preferably 6 mol%, particularly preferably 9.5 mol%.

When in the 1-butene/ethylene copolymer (B) according to the present invention, the amount of the constituent unit (ii) derived from ethylene is within the above-described range, it is possible to obtain good compatibility with a propylene-based polymer (A). The reason why the amount of the constituent unit derived from ethylene is preferably equal to or smaller than the upper limit value is that excellent mechanical strength is exhibited, and in the case of use as, for example, a packaging material, excellent adhesive strength is exhibited, the durability of the film is improved. The reason why the amount of the constituent unit is preferably equal to or greater than the lower limit value is that an appropriate crystallization rate is achieved, and for example, molding conditions broaden during molding processing, so that moldability is improved, and in the case of use as a packaging material, excellent whitening resistance is exhibited during stretching and deformation processing when the 1-butene/ethylene copolymer (B) is combined with the propylene-based polymer (A).

The values of contents (mol%) of the constituent units forming the 1-butene/ethylene copolymer (B) are measured by ¹³C-NMR. Details of the measurement method are as described in Examples described later.

### (Requirement (b-2))

(b-2): An isotactic pentad fraction (mmmm) calculated by ¹³C-NMR is in a range of 80 to 99.9%.

The lower limit value of an isotactic pentad fraction (mmmm) of the 1-butene/ethylene copolymer (B) according to the present invention is preferably 85%, more preferably 90%, further preferably 95% or more. The upper limit value of the isotactic pentad fraction (mmmm) is preferably 99.5%, more preferably 99.0%. When the isotactic pentad fraction (mmmm) is in the above-described range, the copolymer can be designed to have appropriate mechanical strength and softness even if ethylene is copolymerized to control compatibility with a propylene-based copolymer (B) described later.

Details of the method for measuring the isotactic pentad fraction (mmmm) are as described in Examples described later.

### (Requirement (b-3))

(b-3): An intrinsic viscosity [η] as measured in decalin at 135°C is in a range of 0.7 to 2.5 dl/g.

The intrinsic viscosity [η] of the 1-butene/ethylene copolymer (B) according to the present invention is more preferably 0.8 to 2.3 dl/g, further preferably 0.9 to 2.25 dl/g, particularly preferably 1.0 to 2.2 dl/g. The 1-butene/ethylene copolymer (B) whose intrinsic viscosity [η] is in the above-described range is excellent in balance of fluidity and mechanical strength.

Incorporation of the 1-butene/ethylene copolymer (B) is preferable because a molded article excellent in mechanical characteristics can be easily obtained, and it is possible to secure both ease of molding and durability of a packaging material, for example.

### (Requirement (b-4))

(b-4): A melt flow rate (MFR) as measured at 190°C and a load of 2.16 kg in accordance with ASTM D1238 is 1 to 100 g/10 min.

The MFR of the 1-butene/ethylene copolymer (B) according to the present invention is preferably 1 to 50 g/10 min, more preferably 1 to 30 g/10 min, further preferably 1 to 10 g/10 min, particularly preferably 2 to 8 g/10 min.

When the MFR of the 1-butene/ethylene copolymer (B) is in the above-described range, good fluidity is obtained, and the resulting molded article has good mechanical characteristics.

When the MFR is equal to or greater than the lower limit value, fluidity is obtained, so that a composition containing the 1-butene/ethylene copolymer (B) is suitable for molding at a high rate. MFR equal to or smaller than the upper limit value is preferable because a composition containing the 1-butene/ethylene copolymer (B) is excellent in mechanical characteristics, leading to excellent adhesive strength and durability.

### (Requirement (b-5))

(b-5): A weight average molecular weight (Mw) is 100,000 to 600,000.

The 1-butene/ethylene copolymer (B) according to the present invention preferably has a weight average molecular weight (Mw) of 100,000 to 550,000.

The 1-butene/ethylene copolymer (B) according to the present invention has a weight average molecular weight (Mw) of more preferably 100,000 to 520,000, further preferably 100,000 to 500,000, particularly preferably 100,000 to 490,000 when moldability is required. When the weight average molecular weight is in the above-described range, a resin composition containing the 1-butene/ethylene copolymer (B) is suitable for molding at a high rate from the viewpoint of fluidity.

The 1-butene/ethylene copolymer (B) according to the present invention has a weight average molecular weight (Mw) of more preferably 150,000 to 600,000, further preferably 200,000 to 600,000, particularly preferably 202,000 to 600,000 when mechanical strength is required. When the weight average molecular weight is in the above-described range, a resin composition excellent in mechanical characteristics can be easily obtained.

Further, the 1-butene/ethylene copolymer (B) according to the present invention has a molecular weight distribution (Mw/Mn) of preferably 1.5 to 3.0, more preferably 1.6 to 2.8. Mw/Mn is a value in terms of polystyrene, which is measured by a GPC method. The 1-butene/ethylene copolymer (B) in which Mw/Mn is in the above-described range is preferable because the amount of low-molecular-weight components that deteriorate mechanical strength is small and the amount of high-molecular-weight components that impair fluidity is small.

The 1-butene/ethylene copolymer (B) may be partially graft-modified with a polar monomer. Examples of the polar monomer include ethylenically unsaturated compounds containing a hydroxyl group, ethylenically unsaturated compounds containing an amino group, ethylenically unsaturated compounds containing an epoxy group, aromatic vinyl compounds, unsaturated carboxylic acids or derivatives thereof, vinyl ester compounds, and vinyl chloride. The modified 1-butene/ethylene copolymer (B) is yielded through graft reaction of the 1-butene/ethylene copolymer (B) described above with the polar monomer. During graft reaction of the 1-butene/ethylene copolymer (B) described above with the polar monomer, the polar monomer is used in an amount of usually 1 to 100 parts by mass, preferably 5 to 80 parts by mass relative to 100 parts by mass of the 1-butene/ethylene copolymer (B). This graft reaction is usually performed in the presence of a radical initiator. As the radical initiator, organic peroxide or an azo compound can be used. The radical initiator can be mixed as it is with the 1-butene/ethylene copolymer (B) and the polar monomer for use, or may be dissolved in a small amount of an organic solvent for use. Any organic solvent that can dissolve the radical initiator can be used without limitation in particular. During graft reaction of the 1-butene/ethylene copolymer (B) described above with the polar monomer, a reducing substance may be used. Use of the reducing substance can improve the graft amount of the polar monomer.

The graft modification of the 1-butene/ethylene copolymer (B) with the polar monomer can be performed by a method conventionally known, for example, by dissolving the 1-butene/ethylene copolymer (B) in an organic solvent, and then adding a polar monomer and a radical initiator to the solution to react these materials at a temperature of 70 to 200°C, preferably 80 to 190°C, for 0.5 to 15 hours, preferably 1 to 10 hours. Alternatively, using an extruder, the 1-butene/ethylene copolymer (B) can be reacted with a polar monomer in the absence of a solvent to produce a modified 1-butene/ethylene copolymer (B). This reaction is desirably performed at a temperature usually equal to or higher than the melting point of the 1-butene/ethylene copolymer (B), specifically 120 to 250°C, usually 0.5 to 10 minutes.

The modification amount of the modified 1-butene/ethylene copolymer thus yielded (graft amount of the polar monomer) is desirably usually 0.1 to 50 mass%, preferably 0.2 to 30 mass%, more preferably 0.2 to 10 mass%.

If the propylene-based polymer composition according to the present invention contains the modified 1-butene/ethylene copolymer as the 1-butene/ethylene copolymer (B), the propylene-based polymer composition may have high adhesiveness to and miscibility with other resins to improve the wettability of the surfaces of molded products.

The 1-butene/ethylene copolymer (B) may be used alone or in combination of two or more thereof in the resin composition of the present invention.

### <Method for producing 1-butene/ethylene copolymer (B)>

Examples of the method for obtaining the 1-butene/ethylene copolymer (B) according to the present invention include polymerization of a monomer in the presence of a catalyst such as Ziegler-Natta catalyst or a metallocene-based catalyst by a known polymerization method such as a gas phase method, a bulk method or a slurry method. In particular, use of a metallocene catalyst that can uniformly control a reaction is preferable from the viewpoint that not only the polymerized product has a narrow molecular weight distribution and a composition distribution, and it is possible to design a molded article excellent in balance of mechanical strength and softness, but also good compatibility can be obtained particularly in the case of combination with a propylene-based polymer (A) described later, and the crystallization rate can be lowered, and it is particularly preferable to perform polymerization using a metallocene compound (F) represented by the following general formula (1) or (2):

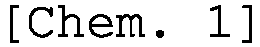

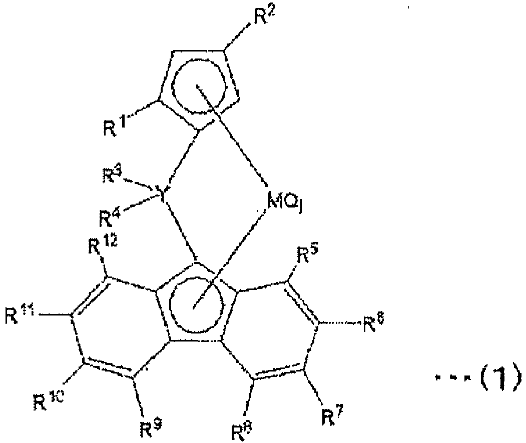

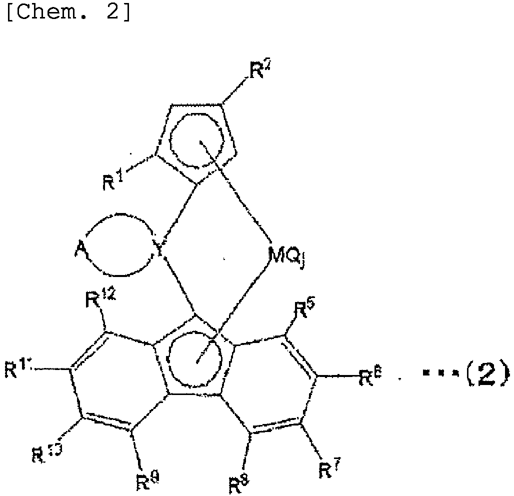

In the general formula (1) or (2), R¹, R², R³, R⁴, R⁵, R⁶, R⁷, R⁸, R⁹, R¹⁰, R¹¹ and R¹² are each selected from hydrogen, a hydrocarbon group and a silicon-containing hydrocarbon group, and may be the same or different.

The hydrocarbon group is preferably an alkyl group having 1 to 20 carbon atoms, an arylalkyl group having 7 to 20 carbon atoms, an aryl group having 6 to 20 carbon atoms, or an alkylaryl group having 7 to 20 carbon atoms, and may contain one or more cyclic structures. Specific examples thereof include methyl, ethyl, n-propyl, isopropyl, 2-methylpropyl, 1,1-dimethylpropyl, 2,2-dimethylpropyl, 1,1-diethylpropyl, 1-ethyl-1-methylpropyl, 1,1,2,2-tetramethylpropyl, sec-butyl and tert-butyl.

The silicon-containing hydrocarbon group is preferably an alkylsilyl group or arylsilyl group having 1 to 4 silicon atoms and 3 to 20 carbon atoms, and specific examples thereof include trimethylsilyl, tert-butyldimethylsilyl and triphenylsilyl.

R² is preferably a sterical hydrocarbon group or silicon-containing hydrocarbon group, that is, a secondary or tertiary substituent, more preferably a substituent having 4 or more carbon atoms. Specific examples of the hydrocarbon group include isopropyl, 1,1-dimethylpropyl, 1,1-diethylpropyl, 1-ethyl-1-methylpropyl, 1,1,2,2-tetramethylpropyl, sec-butyl, tert-butyl and 1,1-dimethylbutyl. Particularly preferable is tert-Butyl. Examples of the silicon-containing hydrocarbon group include compounds having a structure in which part or all of carbon atoms in the compound are substituted with silicon.

The adjacent substituents R⁵ to R¹² on the fluorene ring may be bonded to each other to form a ring. Examples of such a substituted fluorenyl group include benzofluorenyl and dibenzofluorenyl. It is preferable that the substituents R⁵ to R¹² on the fluorene ring be left-right symmetric, that is, R⁵ = R¹², R⁶ = R¹¹, R⁷ = R¹⁰, and R⁸ = R⁹, for ease of synthesis, and more preferably, unsubstituted fluorene, 3,6-disubstituted fluorene, 2,7-disubstituted fluorene or 2,3,6,7-tetrasubstituted fluorene. Here, position 3, position 6, position 2 and position 7 on the fluorene ring correspond to R⁷, R¹⁰, R⁶ and R¹¹, respectively. R³ and R⁴ in the general formula (1) are each selected from hydrogen and a hydrocarbon group, and may be the same or different. Specific examples of the preferred hydrocarbon group include those that are the same as described above. Y is carbon or silicon. In the case of general formula (1), R¹³ and R¹⁴ are bonded to Y and constitute a substituted methylene group or a substituted silylene group as a bridged part. Preferred specific examples thereof include methylene, dimethylmethylene, diisopropylmethylene, methyl tert-butylmethylene, dicyclohexylmethylene, methylcyclohexylmethylene, methylphenylmethylene, diphenylmethylene, dimethylsilylene and diisopropylsilylene. Y is more preferably carbon.

When R² in the general formula (1) or (2) is a tert-butyl group, R¹ is preferably a methyl or ethyl group, preferably a methyl group. Each of R³ and R⁴ in the general formula (1) here is a methyl or phenyl group, preferably a methyl group. R³ and R⁴ are preferably the same. Further, when R² in the general formula (1) is a tert-butyl group, and R¹ is a methyl group, each of R⁵ to R¹² may be hydrogen.

Further, a compound is suitably used in which when R² in the general formula (1) is a tert-butyl group, and R¹ is an ethyl group, each of R⁵, R⁷, R⁸, R⁹, R¹⁰ and R¹² is hydrogen, and each of R⁶ and R¹¹ is a tert-butyl group.

In the case of general formula (2), Y is bonded to a divalent hydrocarbon group A having 2 to 20 carbon atoms, part of which may contain an unsaturated bond and/or an aromatic ring, to form, for example, a cycloalkylidene group or a cyclomethylenesilylene group. Preferred specific examples thereof include cyclopropylidene, cyclobutylidene, cyclopentylidene and cyclohexylidene.

M in the general formulae (1) and (2) is a metal selected from Group 4 of the periodic table, and examples of M include titanium, zirconium and hafnium. Q is selected as a combination of the same or different members of a halogen, a hydrocarbon group having 1 to 20 carbon atoms, an anion ligand, and a neutral ligand capable of coordinating to a lone electron pair. Specific examples of the halogen include fluorine, chlorine, bromine and iodine, and specific examples of the hydrocarbon group include those that are the same as described above. Specific examples of the anion ligand include alkoxy groups such as methoxy, tert-butoxy and phenoxy, carboxylate groups such as acetate and benzoate, and sulfonate groups such as mesylate and tosylate. Specific examples of the neutral ligand capable of coordinating to a lone electron pair can include phosphororganic compounds such as trimethylphosphine, triethylphosphine, triphenylphosphine and diphenylmethylphosphine, and ethers such as tetrahydrofuran, diethyl ether, dioxane and 1,2-dimethoxyethane. Among them, Q may be a combination of the same or different members, and it is preferable that at least one member be a halogen or an alkyl group.

The catalyst for olefin polymerization which is used for polymerization in production of the 1-butene/ethylene copolymer (B) according to the present invention preferably contains, in addition to the metallocene compound (F) represented by the general formula (1) or (2), at least one compound (G) selected from an organoaluminum oxy compound (G-1), a compound (G-2) that reacts with the metallocene compound (F) to form an ion pair, and an organoaluminum compound (G-3). The catalyst for olefin polymerization may further contain a particulate carrier (H) if necessary.

As the organoaluminum oxy compound (G-1) used, a heretofore known aluminoxane can be used as it is.

Examples of the compound (G-2) that reacts with the metallocene compound (F) to form an ion pair (hereinafter, sometimes abbreviated as "ionic compound") include Lewis acids, ionic compounds, borane compounds and carborane compounds described in, for example, JPH1(1989)-501950A and JP2004-51676A. Further, examples include heteropoly compounds and isopoly compounds.

Specific examples thereof include triphenylboron, tris(o-tryl)boron, tris(p-tryl)boron, tris(3,5-dimethylphenyl)boron, trimethylboron and triisobutylboron; compounds having a halogen-containing aryl group, such as compounds having a fluorine-containing aryl group, such as tris(4-fluorophenyl)boron, tris(3,5-difluorophenyl)boron, tris(4-fluoromethylphenyl)boron and tris(pentafluorophenyl)boron; and trifluoroboron.

Examples of the organoaluminum compound (G-3) include organoaluminum compounds represented by the following general formula (3):

RₐₘAl(OR_{b})HₚQ_{q} ·... (3)

wherein Rₐ and R_{b} may be the same as or different from each other, and each represent a hydrocarbon group having 1 to 15, preferably 1 to 4 carbon atoms, Q represents a halogen atom, m is a number of 0 < m ≤ 3, n is a number of 0 ≤ n < 3, p is a number of 0 ≤ p < 3, q is a number of 0 ≤ q < 3, and m + n + p + q = 3 is satisfied.

Specific examples of such a compound include trimethyl aluminum, triethyl aluminum, tri-n-butyl aluminum, dialkyl aluminum hydrides such as diisopropyl aluminum hydride and diisobutyl aluminum hydride, and alkyl aluminum alkoxides such as isobutyl aluminum methoxide and isobutyl aluminum ethoxide.

The organoaluminum compound (G-3) is preferably a tri-n-alkyl aluminum such as trimethyl aluminum, triethyl aluminum or trioctyl aluminum, or a branched trialkyl aluminum such as triisobutyl aluminum, and in particular, trimethyl aluminum and triisobutyl aluminum are preferably used.

In the present invention, polymerization of the 1-butene/ethylene copolymer (B) can be performed by any of liquid-phase polymerization methods such as solution polymerization and suspension polymerization or gas-phase polymerization methods. In the liquid-phase polymerization method, an inert hydrocarbon solvent may be used, and specific examples of thereof include aliphatic hydrocarbons such as propane, butane, pentane, hexane, heptane, octane and decane; alicyclic hydrocarbons such as cyclopentane, cyclohexane and methylcyclopentane; and aromatic hydrocarbons such as benzene, toluene and xylene; or mixtures thereof. Bulk polymerization can also be performed in which an olefin itself, including 1-butene, is used as a solvent.

For performing polymerization, the metallocene compound (F) is used in an amount of typically 10⁻⁸ to 10⁻² mol, preferably 10⁻⁷ to 10⁻³ mol, per liter of reaction volume, in terms of a Group 4 metal atom in the periodic table. The organoaluminum oxy compound (G-1) is used in an amount such that the molar ratio [(G-1)/M] to transition metal atoms (M) in the metallocene compound (F) is usually 0.01 to 5,000, preferably 0.05 to 2,000. The ionic compound (G-2) is used in an amount such that the molar ratio [(G-2)/M] to transition metal atoms (M) in the metallocene compound (F) is usually 1 to 10, preferably 1 to 5. The organoaluminum compound (G-3) is used in an amount such that the molar ratio [(G-3)/M] to transition metal atoms (M) in the metallocene compound (F) is usually 10 to 5,000, preferably 20 to 2,000.

The polymerization temperature is in a range of typically -50 to 200°C, preferably 0 to 100°C, more preferably 20 to 100°C. An excessively low polymerization temperature tends to be industrially disadvantageous from the viewpoint of polymerization activity per unit catalyst and heat recovery efficiency.

The polymerization pressure is under conditions of typically ordinary pressure to a gauge pressure of 10 MPa, preferably ordinary pressure to a gauge pressure of 5 MPa, and the polymerization reaction can be carried out by any of batchwise, half-continuous and continuous methods. Moreover, polymerization can be performed at two or more divided stages different in reaction conditions.

Hydrogen can be added for the purpose of controlling the molecular weight of the 1-butene/ethylene copolymer (A) produced in polymerization or the polymerization activity, and the amount thereof is about 0.001 to 100 NL per kg of the 1-butene/ethylene copolymer (A).

### Polyolefin (C) containing structural unit derived from an unsaturated carboxylic acid and/or a derivative thereof

The polyolefin (C) containing a structural unit derived from an unsaturated carboxylic acid and/or a derivative thereof according to the present invention (hereinafter, also referred to as "polyolefin (C)") is yielded through modification of polyolefin with an unsaturated carboxylic acid and/or a derivative thereof, and contains the structural unit derived from the unsaturated carboxylic acid and/or the derivative thereof.

Examples of the polyolefin to be modified can include polypropylene (c1), ethylene/propylene/α-olefin copolymer (c2), and ethylene/α-olefin copolymer (c3).

These polyolefins (C) may be used singly or as a mixture thereof. For example, the polyolefin (C) may be one of modified products of the polypropylene (c1), modified products of the ethylene/propylene/α-olefin copolymer (c2), and modified products of the ethylene/α-olefin copolymer (c3), or may be a mixture thereof.

The polypropylene (c1) is a homopolymer of propylene and/or a propylene/α-olefin copolymer, for example. Examples of the α-olefin include, but should not be limited to, preferably ethylene and α-olefins having 4 to 20 carbon atoms. These α-olefins may be used singly or in combinations of two or more. Preferred α-olefins are ethylene and α-olefins having 4 to 10 carbon atoms. Among these, particularly suitable are ethylene and α-olefins having 4 to 8 carbon atoms. Here, the content of the structural unit derived from propylene in the propylene/α-olefin copolymer is at least 50 mol % or more and less than 100%.

The polypropylene (c1) preferably has an intrinsic viscosity [η] of 0.1 to 10 dl/g. The intrinsic viscosity [η] of the polyolefin (C) obtained by modifying the polypropylene (c1) is preferably 0.1 to 6 dl/g. An intrinsic viscosity [η] in this range can attain a composition having high moldabilities and mechanical strength.

Examples of the method of producing the polypropylene (c1) include, but should not be particularly limited to, a known method in the presence of a known catalyst such as a Ziegler-Natta catalyst or a metallocene-based catalyst.

The polypropylene (c1) is preferably a crystalline polymer. If the polypropylene (c1) is a copolymer, it may be a random copolymer or may be a propylene block copolymer. Furthermore, the polypropylene (c1) may have any stereoregularity and any molecular weight without limitation as long as it satisfies the moldabilities and has sufficient strength in use when molded products thereof are produced. A commercially available resin can also be used as it is.

The polypropylene (c1) is, for example, homopolypropylene or a propylene/α-olefin random copolymer. The polypropylene (c1) may also contain several different isotactic polypropylenes.

The ethylene/propylene/α-olefin copolymer (c2) is a copolymer of ethylene, propylene and an α-olefin having 4 or more carbon atoms, and satisfies the following requirements of (i) and (ii), for example.
(i) The structural unit derived from propylene is contained at 45 to 90 mol %, the structural unit derived from ethylene is contained at 10 to 25 mol %, and the structural unit derived from an α-olefin having 4 to 20 carbon atoms is contained at 1 to 30 mol %.
(ii) The intrinsic viscosity [η] at 135°C in decalin is in the range of 0.1 to 10 dl/g.

As the α-olefin, α-olefins having 4 to 10 carbon atoms can be suitably used. These α-olefins having 4 to 10 carbon atoms may be used singly or in combinations of two or more. The proportions of the structural units derived from the monomers of propylene, ethylene, and α-olefin are preferably 50 to 85 mol %, 10 to 22 mol %, and 5 to 28 mol %, respectively. The proportions thereof are more preferably 55 to 80 mol %, 10 to 20 mol %, and 10 to 28 mol %, respectively.

In the requirement (ii), the intrinsic viscosity [η] is more preferably in the range of 0.5 to 8 dl/g, further preferably in the range of 0.8 to 6 dl/g. The intrinsic viscosity [η] of the polyolefin (C) obtained by modifying the ethylene/propylene/α-olefin copolymer (c2) is preferably 0.5 to 8 dl/g, more preferably 0.8 to 6 dl/g. An intrinsic viscosity [η] in the above-described range can attain a resin composition which has a good balance between the flexibility and the mechanical strength and is excellent in adhesive strength.

The ethylene/propylene/α-olefin copolymer (c2) can be produced by any known method in the presence of a known catalyst such as a Ziegler-Natta catalyst or a metallocene-based catalyst, but the method should not be particularly limited thereto.

The ethylene/propylene/α-olefin copolymer (c2) can have any stereoregularity and any molecular weight without limitation as long as it satisfies the moldabilities and has sufficient strength in use when molded articles are produced. A commercially available resin can also be used as it is.

The ethylene/α-olefin copolymer (c3) is a copolymer of ethylene and α-olefin, and satisfies the following requirements of (iii) and (iv), for example.
(iii) The structural unit derived from ethylene is contained at 50 to 99 mol % and the structural unit derived from α-olefin having 3 to 20 carbon atoms is contained at 1 to 50 mol %.
(iv) The intrinsic viscosity [η] at 135°C in decalin is in the range of 0.1 to 10 dl/g.

As the α-olefin, α-olefins having 3 to 10 carbon atoms are more suitable. These α-olefins having 3 to 10 carbon atoms may be used singly or in combinations of two or more. The proportions of the structural units derived from the monomers of ethylene and α-olefin are preferably 55 to 98 mol % and 2 to 45 mol %, respectively, more preferably 60 to 95 mol % and 5 to 40 mol %, respectively.

In the requirement (iv), the intrinsic viscosity [η] is more preferably in the range of 0.5 to 8 dl/g, further preferably in the range of 0.8 to 6 dl/g. The intrinsic viscosity [η] of the polyolefin (C) obtained by modifying the ethylene/α-olefin copolymer (c3) is preferably 0.5 to 8 dl/g, more preferably 0.8 to 6 dl/g. An intrinsic viscosity [η] in the above-described range can attain a resin composition which has a good balance between the flexibility and the mechanical strength and is excellent in adhesive strength.

Examples of the method of producing ethylene/α-olefin copolymer (c3) include, but should not be particularly limited to, a known method in the presence of a known catalyst such as a Ziegler-Natta catalyst or a metallocene-based catalyst.

The ethylene/α-olefin copolymer (c3) can have any stereoregularity and any molecular weight without limitation as long as it is excellent in moldability and can yield a molded article such as a film which has strength high enough to withstand use. A commercially available resin can also be used as it is for the ethylene/α-olefin copolymer (c3).

Examples of the unsaturated carboxylic acids and/or derivatives thereof used for modification of these polyolefins can include unsaturated compounds having one or more carboxylic groups, esters of compounds having a carboxylic group and alkyl alcohols, and unsaturated compounds having one or more anhydrous carboxylic group. Examples of the unsaturated groups contained in the unsaturated compounds can include a vinyl group, a vinylene group, and an unsaturated cyclic hydrocarbon group. These unsaturated carboxylic acids and/or derivatives thereof can be used singly or in combinations of two or more. Among these, suitable are unsaturated dicarboxylic acids or acid anhydrides thereof, and particularly preferred are maleic acid, nadic acid, or acid anhydrides thereof.

The content of the structural unit derived from an unsaturated carboxylic acid and/or a derivative thereof contained in the polyolefin (C) is preferably 0.01 to 5 mass%, more preferably 0.05 to 3.5 mass% in terms of the structural unit derived from maleic anhydride. A content of the structural unit derived from an unsaturated carboxylic acid and/or a derivative thereof in this range can provide a resin composition having a good balance between the moldabilities and the adhesiveness.

In the polyolefin (C), the content proportion of the structural unit derived from propylene in the structural units of the polyolefin (C) excluding the structural unit derived from an unsaturated carboxylic acid and/or a derivative thereof is preferably 90 to 100 mol %, more preferably 95 to 100 mol %. A content proportion of the structural unit derived from propylene in this range can provide a resin composition having a heat resistance.

The unsaturated carboxylic acid and/or a derivative thereof can be grafted by any method, and a conventionally known graft reaction method such as a solution method or a melt kneading method can be used without limitation in particular. Examples thereof include a method of melting polyolefin, adding an unsaturated carboxylic acid and/or a derivative thereof thereto to perform a graft reaction; or a method of dissolving polyolefin in a solvent to prepare a solution, and adding an unsaturated carboxylic acid and/or a derivative thereof to perform a graft reaction.

The polyolefin (C) may be used alone or in combination of two or more thereof in the resin composition of the present invention.

### Ethylene-based polymer (D)

The ethylene-based polymer (D) contains a constituent unit derived from ethylene at 60 to 100 mol%. Specific examples of the ethylene-based polymer (D) according to the present invention include a high-pressure low-density polyethylene (D1) and an ethylene/α-olefin copolymer (D2).

When the ethylene-based polymer (D) is used, a molded article such as a film which is particularly excellent in moldability during molding processing and has balanced and excellent whitening resistance during deformation processing, impact resistance and transparency can be easily obtained from the resulting resin composition.

<<High-pressure low-density polyethylene (D1)>>

As the high-pressure low-density polyethylene (D1), known high-pressure low-density polyethylene can be used without restriction. The high-pressure low-density polyethylene is polyethylene that is obtained generally by radical polymerization of ethylene at a high temperature and high pressure, and the method for production thereof is not particularly limited. Examples thereof include radical polymerization methods in which radical polymerization is performed under the conditions of, for example, 500 to 2000 atm and 150 to 300°C, and here, examples of the polymerization initiator include organic peroxides.

The density of the high-pressure low-density polyethylene (D1) is in a range of preferably 900 to 925 kg/m³, more preferably 910 to 925 kg/m³ as measured in accordance with ASTM D1505.

The high-pressure low-density polyethylene (D1) has a melt flow rate (MFR) of preferably 0.1 g/10 min or more, more preferably 0.5 g/10 min or more, particularly preferably 1.0 g/10 min or more, and preferably 50 g/10 min or less, more preferably 30 g/10 min or less, particularly preferably 20 g/10 min or less as measured under the conditions of 190°C and a load of 2.16 kg in accordance with ASTM D1238.

### <<Ethylene/α-olefin copolymer (D2)>>

The ethylene/α-olefin copolymer (D2) contains at least a constituent unit derived from ethylene and a constituent unit derived from an α-olefin having 3 to 20 carbon atoms.

The content of the constituent unit derived from ethylene in the ethylene/α-olefin copolymer (D2) is 60 to 99 mol%, preferably 65 to 99 mol%, more preferably 70 to 99 mol%, particularly preferably 80 to 99 mol%.

The ethylene/α-olefin copolymer (D2) is characterized by having a smaller number of long-chain branched structures as compared to the high-pressure low-density polyethylene (D1), and sometimes typically referred to as linear low-density polyethylene (LLDPE).

The content of the constituent unit derived from an α-olefin having 3 to 20 carbon atoms in the ethylene/α-olefin copolymer (D2) is 1 to 40 mol%, preferably 1 to 35 mol%, more preferably 1 to 30 mol%, particularly preferably 1 to 20 mol%.

Such a content is an amount per 100 mol% in total of constituent units derived from ethylene and an α-olefin having 3 to 20 carbon atoms.

When the content of the constituent unit is in the above-described range, a molded article such as a film which has balanced and excellent whitening resistance during deformation processing, impact resistance and flexibility can be easily obtained from the resulting resin composition.

Examples of the α-olefin having 3 to 20 carbon atoms include propylene, 1-butene, 1-pentene, 3-methyl-1-butene, 1-hexene, 4-methyl-1-pentene, 1-heptene, 1-octene, 1-nonene, 1-decene, 1-undecene, 1-dodecene, 1-tetradecene, 1-hexadecene, 1-octadecene, 1-nonadecene and 1-eicosene. Among them, α-olefins having 3 to 10 carbon atoms are preferable, α-olefins having 3 to 8 carbon atoms are more preferable, propylene, 1-butene and 1-octene are still more preferable, and propylene is particularly preferable.

The α-olefin having 3 to 20 carbon atoms may be used alone or in combinations of two or more thereof.

The ethylene/α-olefin copolymer (D2) may contain, in addition to the above-described constituent units, one or more kinds of constituent units derived from other polymerizable monomers as long as the purpose of the present invention is not hindered.

Examples of such other polymerizable monomers include vinyl compounds such as styrene, vinylcyclopentene, vinylcyclohexane and vinylnorbornane; vinyl esters such as vinyl acetate; unsaturated organic acids such as maleic anhydride or derivatives thereof; and nonconjugated polyenes such as dicyclopentadiene, cyclohexadiene and 5-ethylidene-2-norbornene.

Specific examples of the ethylene/α-olefin copolymer (D2) include ethylene/propylene copolymers, ethylene/1-butene copolymers, ethylene/propylene/1-butene copolymers, ethylene/propylene/ethylidenenorbornene copolymers, ethylene/1-butene/1-octene copolymers, ethylene/4-methyl-1-pentene copolymers, ethylene/1-hexene copolymers and ethylene/1-octene copolymers. Among them, for example, ethylene/propylene copolymers and ethylene/1-butene copolymers are preferable.

The density of the ethylene/α-olefin copolymer (D2) is preferably 840 kg/m³ or more, more preferably 850 kg/m³ or more, particularly preferably 855 kg/m³ or more, and preferably 940 kg/m³ or less, more preferably 899 kg/m³ or less, still more preferably 890 kg/m³ or less, particularly preferably 885 kg/m³ or less.

When the density is in the above-described range, a molded article having balanced and excellent impact resistance, rigidity and transparency can be easily obtained.

The density can be measured by a density-gradient tube method.

The MFR of the ethylene/α-olefin copolymer (D2) (as measured at 190°C and a load of 2.16 kg in accordance with ASTM D1238) is preferably 0.01 g/10 min or more, more preferably 0.1 g/10 min or more, and preferably 40 g/10 min or less, more preferably 20 g/10 min or less, particularly preferably 10 g/10 min or less.

When the MFR is in the above-described range, a molded article having balanced and excellent impact resistance, rigidity and transparency can be easily obtained.

In the ethylene/α-olefin copolymer (D2), the ratio between MFR₁₀ as measured under the conditions of 190°C and a load of 10 kg and MFR_{2.16} as measured under the conditions of 190°C and a load of 2.16 kg in accordance with ASTM D1238 (MFR₁₀/MFR_{2.16}) is preferably 4.0 or more, more preferably 5.0 or more, and preferably 8.0 or less, more preferably 7.0 or less.

When MFR₁₀/MFR_{2.16} is in the above-described range, a molded article having balanced and excellent transparency and impact resistance can be easily obtained.

The ethylene/α-olefin copolymer (D2) can be produced by a heretofore known method using, for example, a vanadium-based catalyst, a titanium-based catalyst or a metallocene-based catalyst. Preferably, production using a metallocene-based catalyst is more suitable from the viewpoint of mechanical properties, transparency and impact resistance because it is possible to obtain a copolymer having a narrow molecular weight distribution and composition distribution.

The ethylene-based polymers (D) may be used alone or in combination of two or more thereof in the resin composition of the present invention.

In the present invention, the monomer for use in production of each of the propylene-based polymer (A), the 1-butene/ethylene copolymer (B), the polyolefin (C) and the ethylene-based polymer (D) may be any one of a fossil fuel-derived monomer, a biomass-derived monomer and a chemical recycle-derived monomer, or a combination of one or more thereof.

### Other components

The resin composition of the present invention may appropriately contain, for example, propylene-ethylene block copolymers, propylene homopolymers, propylene-ethylene random copolymers, propylene-ethylene-butene random copolymers, or styrene-based elastomers having different compositions from that of the present invention as long as the effects of the present invention are not impaired.

The resin composition of the present invention may contain known additives such as antioxidants, ultraviolet absorbing agents, neutralizers, nucleating agents, light stabilizers, antistatic agents, anti-blocking agents, lubricants, odor adsorbents, antibacterial agents, pigments, inorganic and organic fillers, and a variety of synthetic resins when necessary.

### Resin composition

The resin composition according to the present invention comprises the propylene polymer (A), the 1-butene/ethylene copolymer (B), the polyolefin (C) containing a structural unit derived from an unsaturated carboxylic acid and/or a derivative thereof, and the ethylene-based polymer (D).

The resin composition according to the present invention can be produced by a known conventional method. For example, the components described above can be melt kneaded to produce the resin composition.

The content of the 1-butene/ethylene copolymer (B) in the composition of the present invention is 7 to 38 mass%. If the content is less than 7 mass%, it is not possible to obtain an effect of improving whitening resistance. If the content is more than 38 mass%, the mechanical properties of a molded article from the composition are deteriorated. The content of the polyolefin (C) in the resin composition of the present invention is preferably 0.1 to 10 mass%. When the content of the polyolefin (C) in the composition falls within this range, it is possible to exhibit adhesive strength without impairing the mechanical properties of the composition, and the composition is excellent in mechanical properties and adhesive strength.

The contents of the propylene-based polymer (A), the 1-butene/ethylene copolymer (B), the polyolefin (C) and the ethylene-based polymer (D) in the resin composition according to the present invention are preferably 45 to 87.9 parts by mass, 7 to 38 parts by mass, 0.1 to 10 parts by mass, and 5 to 30 parts by mass, more preferably 55 to 78 parts by mass, 10 to 30 parts by mass, 2 to 5 parts by mass, and 10 to 20 parts by mass, respectively, when the total content of the propylene-based polymer (A), the 1-butene/ethylene copolymer (B), the polyolefin (C), and the ethylene-based polymer (D) is 100 parts by mass. When the contents of the components in the resin composition of the present invention are in the above-described ranges, a film including a layer obtained from the present composition is less likely to whiten during deformation processing.

The resin composition of the present invention may contain, in addition to the propylene-based polymer (A), the 1-butene/ethylene copolymer (B), the polyolefin (C) and the ethylene-based polymer (D), other components as long as the purpose of the present invention is not hindered.

Examples of the other components include resin components other than the components (A) to (D), additives such as antioxidants, heat resistant stabilizers, weathering stabilizers, slip agents, antiblocking agents, crystal nucleating agents, and pigments. The content of the other components is not limited, but is in the range of usually 10 parts by mass or less, preferably 0.01 to 5 parts by mass, relative to 100 parts by mass of the total of components (A) to (D).

A biomass-derived raw material may be blended in the resin composition of the present invention.

In the resin composition of the present invention, the Shore D hardness as measured according to ASTM D2240 is preferably in the range of 20 to 70.

The Shore D hardness (as measured according to ASTM D2244) of the resin composition of the present invention is more preferably 25 to 65, further preferably 31 to 60. The Shore D hardness gives an index of the degree of crystallinity. When the Shore D hardness is equal to or lower than the upper limit value, it is possible to obtain a composition having low crystallinity, excellent flexibility, and excellent whitening resistance during stretching. When the Shore D hardness is equal to or greater than the lower limit value, it is possible to obtain a composition excellent in mechanical characteristics.

### <Monolayer film and multilayer film>

The monolayer film and the multilayer film according to the present invention is a monolayer film or a multilayer film comprising at least one layer including the polypropylene-based resin composition. In other words, the monolayer film according to the present invention is a film composed of a layer comprising the polypropylene-based resin composition, and the multilayer film is a multilayer film comprising at least one layer comprising the polypropylene-based resin composition.

The monolayer film and the multilayer film according to the present invention have high whitening resistance during deformation processing. Accordingly, if the monolayer film and the multilayer film according to the present invention are used as packaging materials for food products, construction materials, and packaging materials for lithium ion batteries, these films are barely whitened during secondary processing (such as drawing or bending) of the films. For this reason, the monolayer film and the multilayer film of the present invention can be suitably used as packaging films for food products, films for construction materials, and films for battery packaging such as pouch-type films for battery packaging.

In particular, although polypropylene-based resins have been used as a packaging material for forming packages for lithium ion batteries, the present invention has implemented the prevention of whitening of the packaging material, which has not been prevented by the conventional polypropylene-based resins, by use of a specific combination comprising the propylene-based polymer (A), the 1-butene/ethylene copolymer (B), the polyolefin (C), and the ethylene-based polymer (D) described above.

The multilayer film according to the present invention, for example, comprises at least one layer comprising the polypropylene-based resin composition, and further one or both surfaces of the layer comprising the composition are in contact with another layer. Examples of the different layer in contact with the layer comprising the composition can include metal containing layers, polyolefin layers, and polar resin layers. Examples of the metal containing layer can include aluminum layers, copper layers, and stainless steel layers. Examples of the polyolefin layer can include polypropylene layers, poly-4-methylpentene layers, and polyethylene layer. Examples of the polar resin layer can include polyamide layers, EVOH (ethylene/vinyl alcohol copolymer resin) layers, PET (polyethylene terephthalate) layers, and PBT (polybutylene terephthalate) layers.

The monolayer film and the multilayer film according to the present invention can be suitably prepared through, for example, melt extrusion molding, and can be generally produced by a method industrially used, such as casting, blown, or extrusion coating.

### Examples

Hereinafter, the present invention will be more specifically described by way of Examples and Comparative Examples, but these Examples should not be construed as any limitation to the present invention without departing the gist of the present invention.

### (Methods for measurement)

In Examples, measurements were performed according to the following methods.

### [Melt flow rate (MFR)]

The melt flow rate was measured at 230°C under a load of 2.16 kg according to ASTM D1238.

### [Intrinsic viscosity [η]]

The intrinsic viscosity [η] was measured according to ASTM D1601.

### [Evaluation of whitening resistance]

Molding was performed by a press molding machine under conditions of a preheating and pressing temperature of 200°C, a preheating time of 6 min, a pressure of 10 MPa, a pressing time of 4 min, a cooling temperature of 20°C, a cooling time of 4 min, and a pressure of 10 MPa to prepare a 0.5 mm-thick press sheet (monolayer film). A dumbbell No. 2 specified in JIS K6301 was cut out from the press sheet by punching to prepare a measurement test piece, and changes in color phase of the measurement test piece extended by 0 mm and 20 mm at a tension speed of 200 mm/min at room temperature using a tensile tester ATX manufactured by SHIMADZU Corporation were measured by a reflection method using CM-3700A manufactured by KONICA MINOLTA, INC. A change in color phase in extension by 20 mm from the initial value (0 mm) is defined as ΔL.

### <Measurement of modulus>

Molding was performed by a press molding machine under conditions of a preheating and pressing temperature of 220°C, a preheating time of 8 min, a pressure of 5 MPa, a pressing time of 5 min, a cooling temperature of 20°C, a cooling time of 12 min, and a pressure of 5 MPa to prepare a 2.0 mm-thick press sheet (monolayer film). A dumbbell 5A specified in JIS K7161-2 was cut out from the press sheet by punching to prepare a measurement test piece, and a modulus was measured by conducting a test in which the measurement test piece was extended at a tension speed of 500 mm/min at room temperature using a tensile tester 2005X-5 manufactured by INTESCO co., ltd.

### [Adhesive strength]

Using an extrusion molding machine with a T-die, a 40 µm-thick film was formed from the resin composition described in each of Examples and Comparative Examples. The obtained film was sandwiched between 300 µm-thick aluminum foils, and heat-sealed with a heat sealer at 180°C and 0.1 MPa for 10 seconds to obtain a multilayer film. The obtained multilayer film was cut into a width of 15 mm, and the adhesive strength (unit: N/15 mm) between the aluminum foils and the resin composition layer was measured at room temperature (23°C) by a 180° peeling method using a tensile tester.

### [Polymer composition]

The contents of the structural unit derived from propylene, the structural unit derived from α-olefin in the propylene-based copolymer, and the structural units of the 1-butene/ethylene copolymer (B) were measured by ¹³C-NMR using the following apparatus under the following conditions.

The content of the propylene, α-olefin was quantified using a nuclear magnetic resonance apparatus model JECX 400P manufactured by JEOL Ltd., where a mixed solvent of deuterated ortho-dichlorobenzene/deuterated benzene (80/20% by volume) was used as a solvent, the sample concentration was set to 60 mg/0.6 mL, the measurement temperature was set to 120°C, the observation nucleus was set to 13C (100 MHz), the sequence was set to single-pulse proton decoupling, the pulse width was set to 4.62 µsec (45° pulse), the repetition time was set to 5.5 seconds, the number of scans was set to 8,000, and the reference value of chemical shift was set to 29.73 ppm.

For quantification of the contents of 1-butene and ethylene, measurement was performed as follows using a nuclear magnetic resonance apparatus AVANCE cryo-500 model manufactured by Bruker BioSpin K.K. A mixed solvent of o-dichlorobenzene/deuterated benzene (volume ratio: 80/20) was used as a solvent, the sample concentration was 20 mg/0.6 mL, the measurement temperature was 120°C, observation nucleus was ¹³C (125 MHz), the sequence was single-pulse proton broadband decoupling, the pulse width was 4.7 µsec (45° pulse), the repetition time was 5.5 seconds, the number of scans was 128, and the chemical shift reference value was 27.50 ppm in terms of a carbon signal of the methylene group on the butene side chain. From the obtained ¹³C-NMR spectrum, the composition of 1-butene (C4 content; mol%) and ethylene (C2 content; mol%) was quantified.

### [Weight average molecular weight (Mw) and molecular weight distribution (Mw/Mn)]

A gel permeation chromatograph Alliance GPC-2000 model manufactured by Waters Corporation was used as a GPC apparatus to measure Mw and Mn in terms of polystyrene under the following conditions, and Mw/Mn was calculated.

Separation column: Two columns of TSKgel GNH6-HT manufactured by Tosoh Corporation and two columns of TSKgel GNH6-HTL manufactured by Tosoh Corporation (each of the columns has a size of 7.5 mm in diameter and 300 mm in length).
Column temperature: 140°C
Mobile phase: o-Dichlorobenzene (manufactured by FUJIFILM Wako Pure Chemical Corporation) containing BHT (manufactured by Takeda Pharmaceutical Company Limited) at 0.025 wt% as an antioxidant
Movement rate: 1.0 mL/min
Sample concentration: 15 mg/10 mL
Sample injection volume: 400 µL
Detector: Differential refractometer
Standard polystyrene: A product manufactured by Tosoh Corporation was used when the molecular weight was Mw < 1000 and Mw > 4 × 10⁶, and a product manufactured by Pressure Chemical Co. was used when the molecular weight was 1000 ≤ Mw ≤ 4 × 10⁶.

### [Shore D hardness]

With a D-type instrument, an indentation needle was brought into contact with the test piece, and immediately thereafter, a scale of the maximum value was read, and taken as a Shore D hardness (in accordance with ASTM D2240).

### [Melting point (Tm)]

The melting point (Tm) was measured using a differential scanning calorimeter (DSC) DSC 8500 manufactured by PerkinElmer Co., Ltd. A sample (5 to 10 mg) was sealed in an aluminum pan, which was used as a sample. In the temperature profile, the sample was heated from room temperature to 230°C at 10°C/min, and was kept at 230°C for 5 minutes. The sample was then cooled to -80°C at 10°C/min, and was kept at -80°C for 5 minutes, followed by further heating to 230°C at 10°C/min. From the chart during the second heating operation, the melting point (Tm) was obtained.

Only for the propylene/ethylene/α-olefin copolymer (E), the temperature was raised from -70°C to 200°C at a heating rate of 20°C/min (first temperature raising), maintained at 200°C for 10 minutes, then lowered to -70°C at a cooling rate of 20°C/min (first temperature lowering), maintained at -70°C for 1 minute, and then raised again from -70°C to 200°C at a heating rate of 20°C/min (second temperature raising), and a temperature of a peak observed in the first temperature raising was defined as the melting point (Tm).

### (Polyolefins used)

The polyolefins used in Examples and Comparative Examples are shown below. Unless otherwise specified, all of the polyolefins were prepared through polymerization according to a normal method.

### Propylene-based polymer (A)

Hereinafter, PP-1 and PP-2 both correspond to the isotactic propylene-based polymer (A1).

### PP-1: random polypropylene

(propylene: 96 mol%, ethylene: 4 mol%, MFR = 3.0 g/10 min, Tm: 140°C)
PP-2: random polypropylene
(propylene content: 96 mol%, ethylene content: 4 mol%, MFR = 7.0 g/10 min, Tm: 138°C)

### 1-Butene/ethylene copolymer (B)

### BER-1:

1-Butene/ethylene copolymer synthesized by the following method (structural unit derived from ethylene: 15 mol%, structural unit derived from butene: 85 mol%, MFR = 6 g/10 min, isotactic pentad fraction (mmmm): 98.0%, intrinsic viscosity [η]: 1.71 dl/g, Mw = 366,000)

### [Production Example for BER-1]

n-Hexane was supplied at a rate of 14.2 L/h to a supply port of a continuous polymerization vessel having a volume of 300 liters, and a solution of a mixture of isopropylidene(3-tert-butyl-5-methylcyclopentadienyl-fluolenyl)zirconium dichloride (main catalyst 1), modified methylaluminoxane and triisobutylaluminum in hexane (concentration of main catalyst 1 in terms of zirconium: 0.5 mmol/liter, concentration of modified methylaluminoxane in terms of aluminum: 4 mmol/L, concentration of triisobutylaluminum in terms of aluminum: 100 mmol/L) was continuously supplied at a rate of 0.22 L/h through another supply port (hexane in total: 10 L/h). At the same time, 1-butene, ethylene and hydrogen were continuously supplied at rates of 27.0 kg/h, 1.0 kg/h and 0.6 NL/h, respectively, through another supply port of the polymerization vessel, and continuous solution polymerization was performed under the conditions of a polymerization temperature of 60°C, a polymerization pressure of 0.8 MPaG and a retention time of 1.5 hours to obtain a 1-butene/ethylene copolymer (BER-1).

### BER-2:

1-Butene/ethylene copolymer produced in the same manner as in Production Example for BER-1 except that ethylene and hydrogen were supplied at rates of 0.9 kg/h and 0.1 NL/h, respectively, through another supply port of the polymerization vessel (structural unit derived from ethylene: 15 mol%, structural unit derived from butene: 85 mol%, MFR = 3 g/10 min, isotactic pentad fraction (mmmm): 98.0%, intrinsic viscosity [η]: 2.14 dl/g, Mw = 490,000)

### BER-3:

1-Butene/ethylene copolymer produced in the same manner as in Production Example for BER-1 except that ethylene was supplied at a rate of 0.4 kg/h through another supply port of the polymerization vessel and the polymerization pressure was 0.6 MPaG (structural unit derived from ethylene: 6 mol%, structural unit derived from butene: 94 mol%, MFR = 6 g/10 min, isotactic pentad fraction (mmmm): 93.0%, intrinsic viscosity [η]: 1.71 dl/g, Mw = 360,000)

### BER-4:

BL 3540M manufactured by Mitsui Chemicals, Inc. (structural unit derived from ethylene: 2 mol%, structural unit derived from butene: 98 mol%, MFR = 9 g/10 min, isotactic pentad fraction (mmmm): 93.0%, intrinsic viscosity [η]: 1.50 dl/g, Mw = 337,000)

### Polyolefin (C)

### modified PP-1: modified homopolypropylene

(maleic anhydride graft amount: 3.0 mass%, intrinsic viscosity[η]: 0.4 dl/g)

### Ethylene-based polymer (D)

D-1: low density polyethylene
(MFR: 18 g/10 min, density: 0.92 g/cm³)
D-2: EPR-1: (structural unit derived from ethylene: 80 mol%, structural unit derived from propylene: 20 mol%, MFR = 0.8 g/ 10 min)

### Propylene/ethylene/α-olefin copolymer (E)

structural unit derived from ethylene: 16 mol%, structural unit derived from propylene: 78 mol%, structural unit derived from butene: 6 mol%, MFR = 6 g/ 10 min, Tm = 48°C

### [Example 1]

PP-1 (25.0 parts by mass), PP-2 (42.5 parts by mass), BER-1 (10 parts by mass), modified PP-1 (5 parts by mass), D-1 (7 parts by mass), and D-2 (10.5 parts by mass) were melt-kneaded at 230°C with a single screw extruder to produce a resin composition.

### [Examples 2 to 9 and Comparative Examples 1 to 4]

In Examples 2 to 9 and Comparative Examples 1 to 4, resin compositions were prepared by the same method as in Example 1 according to the compounding formulas shown in Table 1.

The MFRs of the resin compositions prepared in Examples and Comparative Examples, and the whitening resistance, the moduli and the hardness of press sheets prepared from the resin compositions and the adhesive strength of multilayer films prepared from the resin compositions are shown in Table 1.

As shown in Examples 1 to 9, the use of the composition of the present invention enables the provision of a multilayer film excellent in whitening resistance, modulus and adhesiveness. Further, the use of the multilayer film enables the provision of a packaging material for a battery which is excellent in whitening resistance, heat resistance, mechanical properties and durability and adhesiveness.

### [Table 1]

**Table 1**

| | | | **Example 1** | **Example 2** | **Example 3** | **Example 4** | **Example 5** | **Example 6** | **Example 7** |
|---|---|---|---|---|---|---|---|---|---|
| | | | | | | | | | |
| | **Propylene-based polymer (A) PP-1** | **mass%** | **25.0** | **25.0** | **21.0** | **25.0** | **15.0** | | **25.0** |
| | **Propylene-based polymer (A) PP-2** | **mass%** | **42.5** | **32.5** | **26.5** | **42.5** | **42.5** | **47.5** | **42.5** |
| | **1-Butene/ethylene copolymer (B) BER-1** | **mass%** | **10** | **20** | **30** | | | | |
| | **1-Butene/ethylene copolymer (B) BER-2** | **mass%** | | | | **10** | **20** | **30** | |
| | **1-Butene/ethylene copolymer (B) BER-3** | **mass%** | | | | | | | **10** |
| Composition | **1-Butene/ethylene copolymer (B) BER-4** | **mass%** | | | | | | | |
| | Unsaturated carboxylic acid-containing polyolefin (C) modified PP-1 | **mass%** | **5** | **5** | **5** | **5** | **5** | **5** | **5** |
| | **Ethylene-based polymer (D-1)** | **mass%** | **7** | **7** | **7** | **7** | **7** | **7** | **7** |
| | **Ethylene-based polymer (D-2)** | **mass%** | **10.5** | **10.5** | **10.5** | **10.5** | **10.5** | **10.5** | **10.5** |
| | **Propylene/ethylene/α-olefin copolymer (E)** | **mass%** | | | | | | | |
| Property | **MFR 230°C, 2.16 kgf** | **g/10 min** | **6.2** | **6.1** | **6.2** | **5.8** | **5.7** | **6.0** | **6.2** |
| | Whitening resistance **Δ**L | **-** | **24** | **2.2** | **1.4** | **25** | **2.4** | **1.7** | **29** |
| | Modulus | **MPa** | **740** | **540** | **360** | **750** | **570** | **370** | **980** |
| | Shore D hardness | **-** | **57** | **55** | **54** | **57** | **56** | **54** | **59** |
| | Adhesiveness | **N/15 mm** | **120** | **130** | **170** | **110** | **120** | **160** | **110** |

| | | | | **Example 8** | **Example 9** | **Comparative Example 1** | **Comparative Example 2** | **Comparative Example 3** | **Comparative Example 4** |
|---|---|---|---|---|---|---|---|---|---|
| | | | | | | | | | |
| | **Propylene-based polymer (A) PP-1** | | **mass%** | **25.0** | **21.0** | **25.0** | **33.0** | **27** | **17** |
| | **Propylene-based polymer (A) PP-2** | | **mass%** | **32.5** | **26.5** | **32.5** | **24.5** | **45.5** | **20.5** |
| | **1-Butene/ethylene copolymer (B) BER-1** | | **mass%** | | | | | | |
| | **1-Butene/ethylene copolymer (B) BER-2** | | **mass%** | | | | | **5** | **40** |
| | **1-Butene/ethylene copolymer (B) BER-3** | | **mass%** | **20** | **30** | | | | |
| Composition | **1-Butene/ethylene copolymer (B) BER-4** | | **mass%** | | | | **20** | | |
| | Unsaturated carboxylic acid-containing polyolefin (C) modified PP-1 | | **mass%** | **5** | **5** | **5** | **5** | **5** | **5** |
| | **Ethylene-based polymer (D-1)** | | **mass%** | **7** | **7** | **7** | **7** | **7** | **7** |
| | **Ethylene-based polymer (D-2)** | | **mass%** | **10.5** | **10.5** | **10.5** | **10.5** | **10.5** | **10.5** |
| | **Propylene/ethylene/α-**olefin copolymer (E) | | **mass%** | | | **20** | | | |
| Property | **MFR 230°C, 2.16 kgf** | | **g/10 min** | **6.1** | **6.2** | **6.1** | **6.0** | **6.1** | **6.3** |
| | Whitening resistance **ΔL** | | **-** | **15** | **5.2** | **31** | **51** | **47** | **1.2** |
| | Modulus | | **MPa** | **720** | **540** | **540** | **830** | **830** | **180** |
| | Shore D hardness | | **-** | **57** | **55** | **55** | **58** | **58** | **52** |
| | Adhesiveness | | **N/15 mm** | **120** | **160** | **150** | **120** | **100** | **180** |

## Claims

1. A resin composition comprising:
a propylene-based polymer (A) satisfying the following requirement (a);
a 1-butene/ethylene copolymer (B) satisfying the following requirement (b-1);
a polyolefin (C) containing a structural unit derived from an unsaturated carboxylic acid and/or a derivative thereof; and
an ethylene-based polymer (D) containing a constituent unit derived from ethylene at 60 to 100 mol%,
wherein a content of the 1-butene/ethylene copolymer (B) in the composition is 7 to 38 mass%:
(a) a melting point as measured by differential scanning calorimetry is 100°C or more; and
(b-1) a content of a constituent unit (i) derived from 1-butene is in a range of 70 to 97 mol%, and a content of a constituent unit (ii) derived from ethylene is in a range of 3 to 30 mol% when a total of the constituent units (i) and the constituent units (ii) is 100 mol%.

2. The resin composition according to claim 1, comprising: 45 to 87.9 parts by mass of the propylene-based polymer (A);
7 to 38 parts by mass of the 1-butene/ethylene copolymer (B);
0.1 to 10 parts by mass of the polyolefin (C); and
5 to 30 parts by mass of the ethylene-based polymer (D) (provided that a total of (A), (B), (C) and (D) is 100 parts by mass).

3. The resin composition according to claim 1, wherein the polyolefin (C) contains 0.01 to 5 mass% of the structural unit derived from an unsaturated carboxylic acid and/or a derivative thereof in terms of a structural unit derived from maleic anhydride, and
further, in the polyolefin (C), a content proportion of the structural unit derived from propylene in the structural units excluding the structural unit derived from an unsaturated carboxylic acid and/or a derivative thereof is 90 to 100 mol %.

4. The resin composition according to claim 1, wherein an isotactic pentad fraction (mmmm) of the 1-butene/ethylene copolymer (B) calculated by ¹³C-NMR is in a range of 80 to 99.9%.

5. The resin composition according to claim 1, wherein a weight average molecular weight (Mw) of the 1-butene/ethylene copolymer (B) is 100,000 to 600,000.

6. The resin composition according to claim 1, wherein a Shore D hardness as measured according to ASTM D2240 is in a range of 20 to 70.

7. A monolayer film or a multilayer film comprising at least one layer comprising the resin composition according to any one of claims 1 to 6.

8. A multilayer film comprising at least one layer containing the resin composition according to any one of claims 1 to 6, wherein both surfaces of the layer containing the resin composition are in contact with another layer.

9. A multilayer film comprising at least one layer containing the resin composition according to any one of claims 1 to 6, wherein one or both surfaces of the layer containing the resin composition are in contact with at least one of a metal-containing layer, a polyolefin layer and a polar resin layer.

10. The monolayer film or multilayer film according to claim 7, wherein the film is a film for food packaging.

11. The monolayer film or multilayer film according to claim 7, wherein the film is a film for a construction material.

12. The monolayer film or multilayer film according to claim 7, wherein the film is a film for battery packaging.

13. The monolayer film or multilayer film according to claim 7, wherein the film is a pouch-type film for battery packaging.

14. A method of producing a monolayer film or a multilayer film, comprising the step of performing melt extrusion molding of the resin composition according to any one of claims 1 to 6.
